(19) Europäisches Patentamt
European Patent Office
Office européen des brevets

(11) **EP 3 199 249 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **16153410.2**

(22) Anmeldetag: **29.01.2016**

(51) Int Cl.:
**B05D 7/26** *(2006.01)*          **B05D 1/40** *(2006.01)*
**B05D 1/42** *(2006.01)*          **B05C 11/02** *(2006.01)*
**B05C 11/04** *(2006.01)*          **G01B 11/30** *(2006.01)*
**G01B 13/22** *(2006.01)*          **G01B 5/28** *(2006.01)*

(54) **BESCHICHTUNGSFILMAUFZIEHVORRICHTUNG, VERFAHREN ZUR UNTERSUCHUNG DER OBERFLÄCHE EINES BESCHICHTUNGSFILMS UND VERWENDUNG DER BESCHICHTUNGSFILMAUFZIEHVORRICHTUNG FÜR DIE BESTIMMUNG DER OBERFLÄCHE EINES BESCHICHTUNGSFILMS**

COATING FILM APPLYING DEVICE, METHOD FOR THE EXAMINATION OF THE SURFACE OF A COATING FILM AND USE OF THE COATING FILM APPLYING DEVICE FOR DETERMINING THE SURFACE OF A COATING FILM

DISPOSITIF DESTINE A TENDRE UN FILM DE REVETEMENT, PROCEDE D'EXAMEN DE LA SURFACE D'UN FILM DE REVETEMENT ET UTILISATION DU DISPOSITIF DESTINE A TENDRE UN FILM DE REVETEMENT POUR LA DETERMINATION DE LA SURFACE D'UN FILM DE REVETEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.08.2017 Patentblatt 2017/31**

(73) Patentinhaber: **DAW SE**
**64372 Ober-Ramstadt (DE)**

(72) Erfinder:
• **Overmeyer, Sonja**
**64372 Ober-Ramstadt (DE)**
• **Walter, Christian**
**64846 Groß-Zimmern (DE)**

(74) Vertreter: **Metten, Karl-Heinz**
**Boehmert & Boehmert**
**Anwaltspartnerschaft mbB**
**Pettenkoferstrasse 22**
**80336 München (DE)**

(56) Entgegenhaltungen:
**DE-B- 1 264 822**

• **Anonymous: "K C O N T R O L C O A T E R & K P A I N T A P P L I C A T O R", , 1. Februar 2011 (2011-02-01), Seiten 1-4, XP055286764, Gefunden im Internet: URL:http://www.rkprint.co.uk/wp-content/uploads/2011/01/KControlCoater.pdf [gefunden am 2016-07-07]**
• **Anonymous: "Wave Scan | BYK-Gardner", , 18. Januar 2008 (2008-01-18), XP055286749, Gefunden im Internet: URL:http://www.glossmeters.com/wave-scan.html [gefunden am 2016-07-07]**

**Beschreibung**

Die vorliegende Erfindung betrifft eine Beschichtungsfilmaufziehvorrichtung sowie ein Verfahren zur Untersuchung der Oberfläche eines Beschichtungsfilms, insbesondere der Bestimmung der Verlaufseigenschaften und der Offenzeit eines Beschichtungsfilms. Ferner betrifft die Erfindung die Verwendung der erfindungsgemäßen Beschichtungsfilmaufziehvorrichtung für die, insbesondere maschinelle, Bestimmung der Oberfläche, insbesondere der Güte der Oberfläche eines Beschichtungsfilms.

Mit der Applikation von Lacken auf Oberflächen werden regelmäßig glatte Lackbeschichtungen angestrebt. Unregelmäßigkeiten in der Beschichtungsoberfläche von Lacken sind nicht selten Anlass für Beanstandungen. Dies trifft nicht nur auf zum Beispiel Autolacke zu, sondern in gleicher Weise auch auf Maler- und Bautenlacke. Werden solche Maler- und Bautenlacke mit Pinsel oder Rolle appliziert, entstehen zunächst prozessbedingt Unregelmäßigkeiten. Bei Lacken mit guten Verlaufseigenschaften ebnen sich solche Unregelmäßigkeiten bzw. Unebenheiten vor dem Aushärten bzw. Trocknen des Lackes ein, so dass trotz der anfänglichen Oberflächenstruktur im Endzustand eine ästhetisch wie funktional ansprechende Oberfläche erhalten wird. Die Eigenschaft, applikationsbedingte Unregelmäßigkeiten vor dem Aushärten bzw. Trocknen eines Lackes selbständig auszugleichen, wird im Allgemeinen als Verlauf bezeichnet. Ein solcher Verlauf eines Lackes stellt ein zentrales Qualitätskriterium für diesen dar. Bei Maler- und Bautenlacken erfolgt die Prüfung der Güte eines Lackes noch stets per Augenschein. Obwohl mit vielen subjektiven Einflüssen bzw. Mängeln behaftet, stellt diese Art der Prüfung gegenwärtig noch stets ein unverzichtbares Element bei der Prüfung und Entwicklung neuer Lacke dar. Gegenwärtig werden die Ergebnisse der Prüfung der Qualität einer Lackoberfläche des Weiteren mit beeinflusst durch z.B. die Art der Aufbringung durch den Prüfer, durch die Technik der Aufbringung und durch das verwendete Werkzeug. Auch können die gewählte Beleuchtungssituation, der Betrachtungswinkel und gegebenenfalls sogar persönliche Vorlieben des Prüfers Einfluss auf die Güteprüfung einer Lackoberfläche haben. Ein objektives Ergebnis ist auf diese Weise nicht zu erhalten. Insbesondere ist es nicht möglich, die Qualität bzw. Güte der Oberfläche unterschiedlicher Lacke miteinander zu vergleichen, insbesondere auch nicht hinsichtlich ihrer Verlaufseigenschaften. Des Weiteren war es insbesondere an verschiedenen Standorten nicht möglich, eine Vergleichbarkeit für diese Gütebestimmung zu erreichen.

Neben der Prüfung der Verlaufseigenschaften eines Lackes wird für die Qualitätssicherung und Qualitätsbeurteilung auch das Kriterium der Offenzeit herangezogen. Mit der Offenzeit wird diejenige Zeitspanne angegeben, innerhalb der eine applizierte Lackbeschichtung korrigiert werden kann und anschließend noch einen guten Verlauf, das heißt einen Ausgleich applikationsbedingter Unebenheiten, zeigt. Nach dem Ablauf der Offenzeit ist eine applizierte Lackbeschichtung zwar noch nicht ausgehärtet, eine Korrektur, beispielsweise durch Einstreichen mit einem Pinsel oder nochmaliges Überarbeiten mit einer Rolle, ist jedoch nicht mehr möglich. Eine solche Korrektur nach Ablauf der Offenzeit führt zu Oberflächenfehlern von Lackbeschichtungen, wie zum Beispiel Stippen, Unebenheiten und zu dünnen Filmstärken. Diese Oberflächenfehler sind häufig nicht nur ästhetisch zu beanstanden, sondern können auch funktionale Störungen mit sich bringen, beispielsweise hinsichtlich Korrosionsschutz, Wärmeisolation, Wärmeaufnahme oder Beständigkeit gegenüber Schädlingen wie Pilzen und Algen. Die Offenzeit stellt damit ein wichtiges Qualitätsmerkmal dar, welches Entwicklern und Anwendern als wertvolle Information dient, um optimale Ergebnisse bei der Entwicklung und Applikation von Farben und Lacken zu erreichen. Wie bei der Bestimmung der Verlaufseigenschaften von Lacken wird auch für die Bestimmung der Offenzeit der zu prüfende Lack zunächst händisch aufgetragen. Hierbei ist von Nachteil, dass die Offenzeit vielfach von der aufgetragenen Schichtdicke abhängt. Dies führt regelmäßig zu nicht reproduzierbaren Prüfverläufen. Auch hängt die Offenzeit stark ab von den Umgebungsbedingungen, die wiederum einen Einfluss auf die Trocknungseigenschaften von Lacken haben. Neben der Prüfung gemäß Augenschein hat man versucht, die Offenzeit über den händisch wahrgenommenen Streichwiderstand zu bestimmen. Auch dies führt regelmäßig zu subjektiv gefärbten Resultaten. Alternativ hat man versucht, die Offenzeit instrumentell zu bestimmen. Hierbei wird eine Nadel langsam durch einen trocknenden Lackfilm gezogen. Aus der zeitlichen Änderung des Rheologieverhaltens wird auf die Offenzeit geschlossen. Diese Methode gestattet allerdings keine Rückschlüsse auf den Verlauf der Lackbeschichtung nach der definierten Störung durch die Nadel.

Aus dem Internetartikel "K CONTROL COATER & K PAINT APPLICATOR" vom Februar 2011 (URL:http://www.rkprint.co.uk/wp-content/uploads/2011/01/KControlCoater.pdf) ist eine Beschichtungsfilmaufziehvorrichtung bekannt, umfassend einen Substratkörper mit einer ebenen Beschichtungsseite für die Auftragung eines Beschichtungsfilms und mit einem ersten Abschnitt für die Aufnahme einer den Beschichtungsfilm bildenden Beschichtungsmasse und einem zweiten Abschnitt für die Ausbildung des Beschichtungsfilms aus der Beschichtungsmasse, eine Spaltrakel mit einer Ziehkante mit vorgegebener oder einstellbarer Spalthöhe oder eine Spiralrakel, wobei Spaltrakel oder Spiralrakel auf der ebenen Beschichtungsseite des Substratkörpers angeordnet sind.

Die aus dem Stand der Technik bekannten Verfahren zur Bestimmung der Güte der Oberflächen von Lackbeschichtungen der Maler- und Bautenlackbranche sind noch stets mit mannigfaltigen Nachteilen behaftet.

Der vorliegenden Erfindung lag daher die Aufgabe zugrunde, eine Vorrichtung bzw. ein Verfahren zur Verfügung zu stellen, mit dem sich die Qualität der Oberfläche von Lacken insbesondere der Maler- und Bautenlackbranche, beispielsweise hinsichtlich der Verlaufseigenschaften und/oder der Offenzeit von Lacken, relativ objektiv bewerten lässt.

Demgemäß wurde eine Beschichtungsfilmaufziehvorrichtung nach Anspruch 1 gefunden. Die erfindungsgemäße Anordnung von Spaltrakel und Spiral- oder Rillenrakel führt dazu, dass die Spaltrakel stets zuerst über den Substratprüfkörper unter Ausbildung eines Beschichtungsfilms geführt wird und dass die Spiral- oder Rillenrakel auf diesen applizierten Beschichtungsfilm einwirken.

Hierbei kann der Substratkörper eine Glasplatte, Kristallglasplatte, Holzplatte, Metallplatte, Kunststoffplatte, Kunststofffolie oder einen Prüfkarton, insbesondere eine Glasplatte, darstellen oder umfassen. Der Substratkörper ist in der Weise ausgelegt und eingerichtet, dass eine ebene Beschichtungsseite erhalten werden kann oder vorliegt.

Es hat sich als vorteilhaft erwiesen, Lackprüfungen mithilfe der erfindungsgemäßen Beschichtungsfilmaufziehvorrichtung in der Weise durchzuführen, dass diese Vorrichtung während der Applikation der Beschichtungsmasse völlig unbeweglich gehalten wird. Hierfür kann in einer Ausgestaltung der Erfindung auf mindestens eine Fixiervorrichtung, eingerichtet und ausgelegt zur Fixierung des Substratkörpers, insbesondere ausgewählt aus der Gruppe bestehend aus Schrauben, Klammern, Magneten, Klemmen, Klebevorrichtungen, insbesondere Klebebändern, Rahmen, Stoppern und Vakuumansaugvorrichtungen, ausgelegt und eingerichtet zum Ansaugen des Substratkörpers von der der ebenen Beschichtungsseite gegenüberliegenden Seite, zurückgegriffen werden.

In der erfindungsgemäßen Beschichtungsfilmaufziehvorrichtung liegt die ebene Beschichtungsseite des Substratkörpers zweckmäßigerweise im Wesentlichen horizontal ausgerichtet vor. Hierdurch gelingt es besonders zuverlässig, reproduzierbare Ergebnisse zu erhalten.

Grundsätzlich können mit der erfindungsgemäßen Beschichtungsfilmaufziehvorrichtung vielfältige Beschichtungsmassen zuverlässig und wiederholbar auf der Beschichtungsseite appliziert werden. Bei diesen Beschichtungsmassen handelt es sich vorzugsweise um viskose Beschichtungsmassen, die in einem Zustand vorliegen, so dass sie relativ gleichmäßig über eine Fläche verteilt werden können. Besonders bevorzugt lassen sich mit der erfindungsgemäßen Beschichtuftgsfilmaufziehvorrichtung Maler- oder Bautenlackfilme erhalten und anschließend auf ihre Oberflächengüte bzw. ihr Verlaufs- und/oder Offenzeitverhalten untersuchen. Grundsätzlich können mit der erfindungsgemäßen Beschichtungsfilmaufziehvorrichtung Beschichtungsfilme aus Farben-, Lack-, Dispersionsbeschichtungs- und Putzmaterialien erhalten werden. Demgemäß umfassen geeignete Beschichtungsmassen z.B. Acryl-, Alkydharz-, Polyurethan-, Vinylacetat,- Epoxidharz- oder Silikatbeschichtungsmassen sowie deren Mischungen. Des Weiteren können auch Konsum-, Industrie-, Maschinen- und/oder Fahrzeuglacke mit der erfindungsgemäßen Beschichtungsfilmaufziehvorrichtung auf ihre Oberflächengüte bzw. ihr Verlaufs- und/oder Offenzeitverhalten untersucht werden.

Die für die erfindungsgemäße Beschichtungsfilmaufziehvorrichtung geeigneten Rakel wie Spaltrakel, Spiralrakel und Rillenrakel sind dem Fachmann hinlänglich bekannt. Als Spaltrakel kommt in einer geeigneten Ausführungsform eine Kastenrakel zum Einsatz. Mithilfe von einer Kastenrakel gelingt es besonders einfach, die für die Herstellung eines Beschichtungsfilms erforderliche Beschichtungsmasse aufzugeben. Die Kastenrakel liegt bei dem Auftrag der Beschichtungsmasse auf der Beschichtungsseite des Sübstratkörpers, d.h. vor der eigentlichen Verteilung der Beschichtungsmasse mithilfe der Rakel über die ebene Fläche der Beschichtungsseite, zweckmäßigerweise in dem ersten Abschnitt der Beschichtungsseite vor.

Die Ziehkante der Spaltrakel verfügt in geeigneten Ausführungsformen über eine Spalthöhe im Bereich von 15 bis 5000 $\mu$m, bevorzugt im Bereich von 15 bis 2000 $\mu$m, insbesondere im Bereich von 75 bis 200 $\mu$m. Über die Spalthöhe der Ziehkante kann die Dicke des Beschichtungsfilms eingestellt werden. Die Spalthöhe ist in einer besonders zweckmäßigen Ausgestaltung über die Ausdehnung der Ziehkante konstant.

Über die Gestaltung der Spiralen bzw. Rinnen von Spiral- und Rillenrakel lässt sich die Nassschichtdicke der Beschichtungsfilme in weiten Bereichen einstellen. Es hat sich in vielen Fällen als zweckmäßig erwiesen, auf solche Spiral- und Rillenrakel zurückzugreifen, die eine Nassschichtdicke im Bereich von 20 bis 5200 $\mu$m, bevorzugt im Bereich von 20 bis 2200 $\mu$m, insbesondere im Bereich von 80 bis 210 $\mu$m, aufweisen bzw. liefern. Die Spiral- oder Rillenrakel sind in einer besonders zweckmäßigen Ausgestaltung derart eingerichtet und ausgelegt, dass sie eine konstante Nassschichtdicke aufweisen bzw. liefern.

Für die Bestimmung der Verlaufseigenschaften eines Beschichtungsfilms, insbesondere von Maler- und Bautenlacken, setzt man eine erfindungsgemäße Beschichtungsfilmaufziehvorrichtung ein, bei der die Spalthöhe der Ziehkante der Spaltrakel kleiner ist als die Nassschichtdicke der Spiral- oder Rillenrakel. Mithilfe dieser speziellen Gestaltung kann das Ausmaß des Verlaufs einer Beschichtungsmasse besonders zuverlässig und reproduzierbar bestimmt werden. So wird bei dieser bevorzugten Ausgestaltung die Materialmenge durch das vorgeschaltete Spaltrakel, insbesondere Kastenrakel, einfach und reproduzierbar begrenzt, und zwar auf eine Menge, die nicht mehr ausreicht, dass die Spiral- oder Rillenrakel eine gut verlaufende, störungsfreie Oberfläche erzeugen kann. Die typischen, von Spiral- oder Rillenrakeln erzeugten Störungen verlaufen dann nicht mehr perfekt. Die bei der vorangehenden Ausführungsform durch eine Kombination aus Kasten- und Spiral- oder Rillenrakel erzeugten, gefurchten Flächen sind für das jeweilige Material typisch. Unter Benutzung der gleichen Kombination der beiden Rakeltypen und unter ähnlichen Trocknungsbedingungen ist die Tiefe der Furchen im Wesentlichen nur von den Verlaufseigenschaften des Materials abhängig. Beispielsweise erzeugt eine Spiral- oder Rillenrakel mit einer Nennschichtdicke von 200 μm, je nach Fabrikat, regelmäßige Störungen im Abstand von etwa 1 bis 3 mm. Dieser Abstand entspricht der Wellenlänge von Störungen, deren Ausgleich durch das Beschichtungsmaterial typischerweise als dessen Verlauf wahrgenommen wird.

Von Vorteil ist hierbei auch, dass über die Wahl der Spalthöhe der Spaltrakel, insbesondere Kastenrakel, die Prüfung über einen weiten Bereich an das zu prüfende Material angepasst werden kann.

Grundsätzlich kann die Spiral- oder Rillenrakel beabstandet von der Spaltrakel oder auch benachbart zur Spaltrakel bei der Verteilung der Beschichtungsmasse auf der Beschichtungsseite vorliegen. Insbesondere für die Bestimmung der Verlaufseigenschaften eines applizierten Beschichtungsfilms hat es sich als sehr vorteilhaft erwiesen, wenn Spaltrakel und Spiral- bzw. Rillenrakel direkt nebeneinander, d.h. benachbart, sowie insbesondere in direktem Kontakt miteinander stehend vorliegen. Für die Bestimmung der Offenzeit eines Beschichtungsfilms, insbesondere einer Maler- oder Bautenlackbeschichtung hat es sich hingegen als sehr vorteilhaft erwiesen, wenn Spaltrakel einerseits und Spiral- bzw. Rillenrakel andererseits getrennt, d.h. beabstandet voneinander vorliegen und in dieser Weise über die Beschichtungsseite bei der Verteilung der Beschichtungsmasse geführt werden. Dieses schließt ebenfalls eine Ausführungsform ein, bei der in einem ersten Schritt mithilfe der Spaltrakel ein Beschichtungsfilm erzeugt und in einem zweiten Schritt dieser frisch applizierte Beschichtungsfilm mit einer Spiral- oder Rillenrakel behandelt wird.

Besonders zuverlässige Untersuchungsergebnisse erhält man mit der erfindungsgemäßen Beschichtungsfilmaufziehvorrichtung auch dadurch, dass vorgesehen wird, dass die Spiral- oder Rillenrakel, insbesondere beim Applikationsvorgang der Beschichtungsmasse bzw. beim Führen über den Beschichtungsfilm auf bzw. entlang der ebenen Beschichtungsseite des Substratkörpers, nicht um die eigene Längsachse drehbar ist bzw. gedreht wird. Bevorzugt ist die Spiral- oder Rillenrakel als Bestandteil der erfindungsgemäßen Beschichtungsfilmaufziehvorrichtung bewegungsinvariant in Bezug auf eine Drehung um die eigene Längsachse, insbesondere bei der Führung über den applizierten Beschichtungsfilm bzw. die Beschichtungsmasse, ausgestaltet.

Die erfindungsgemäße Beschichtungsfilmaufziehvorrichtung kann in einer bevorzugten Weiterentwicklung mindestens eine Vorrichtung zur Vermessung der Oberfläche des Beschichtungsfilms aufweisen. Hierbei kann es sich zweckmäßigerweise um ein Profilometer, insbesondere ein optisches und/oder taktiles Profilometer, wie Lichtinterferometer oder Laserprofilometer, oder ein Konfokalmikroskop, bevorzugt mindestens ein taktiles Profilometer und/oder Laserprofilometer, jeweils eingerichtet und ausgelegt zur Vermessung der Oberfläche eines auf der ebenen Beschichtungsseite des Substratkörpers aufgetragenen Beschichtungsfilms, handeln. Darüber hinaus können auch weitere Rauheitsmessgeräte, wie im Handel erhältlich und dem Fachmann bekannt, für die Vermessung der Oberfläche eines Beschichtungsfilms eingesetzt werden. Hierdurch wird die Funktionalität der erfindungsgemäßen Vorrichtung nochmals erweitert. Beispielsweise kann der mit einem Beschichtungsfilm versehene Substratkörper bei der Vermessung des Beschichtungsfilms in der mithilfe der Fixierungsmittel fixierten Position in der Beschichtungsfilmaufziehvorrichtung verbleiben. Alternativ kann der Substratkörper zur Vermessung des darauf vorliegenden Beschichtungsfilms zu der Vorrichtung zur Vermessung der Oberfläche des Beschichtungsfilms verbracht werden.

Als geeignete Vorrichtung zur Vermessung der Oberfläche eines Beschichtungsfilms kann für die instrumentelle Beurteilung von Lackoberflächen z.B. das Gerät *wavescan dual* der Firma BYK Gardner eingesetzt werden. Hierbei handelt es sich um ein optisches Profilometer. Mit diesem Gerät werden mittels eines Lasers die Höhen und Tiefen einer Oberfläche erfasst, wobei etwa 400 Einzelmessungen pro cm nach der Messung im Gerät ausgewertet und die Gleichmäßigkeit der Lackoberfläche anschließend mit wenigen gut interpretierbaren Kennzahlen charakterisiert werden. Laut Hersteller beschreibt eine dieser Kennzahlen, Wc, Welligkeiten im relevanten Bereich von 1 bis 3 mm. Derartige Profilometer eignen sich vorzugsweise nur für glänzende, d.h. stark reflektierende Oberflächen.

Es wurde überraschend gefunden, dass sich auch matte Lackoberflächen oder Lackoberflächen mit mittlerem Glanz (auch seidenglänzende Lackoberflächen genannt) reproduzierbar und zuverlässig mit einem optischen Profilometer vermessen lassen, z.B. mit dem vorangehend genannten Gerät *wavescan dual* der Firma BYK Gardner, wenn die Oberflächen mit einem glänzenden Klebeband bzw. mit einer glänzenden Klebefolie versehen werden.

Eine Oberfläche bzw. Beschichtung ist glänzend im Sinne der Erfindung, wenn die gemäß der Norm DIN EN 13300:2002-11 mit einem Reflektometer ermittelten Glanzeinheiten bei dem Wert 60 oder darüber liegen (bei einem Messwinkel von 60°). Nach dieser Norm spricht man von einem matten Glanzgrad, wenn das Messgerät (bei einem Messwinkel von 85°) weniger als 10 Einheiten anzeigt, von einem mittleren Glanz, wenn das Messgerät (bei einem Messwinkel von 85°) 10 Einheiten bzw. bei einem Messwinkel von 60° weniger als 60 Einheiten anzeigt, und von einem stumpfmatten Glanzgrad, wenn das Messgerät bei einem Messwinkel von 85° weniger als 5 Einheiten anzeigt. Für einen nach der Norm DIN EN 13300:2002-11 ermittelten mittleren Glanz ist anerkannt, dass hierfür der Begriff seidenglänzend verwendet bzw. beibehalten werden kann. Mit dem erfindungsgemäßen Verfahren lassen sich insbesondere auch glänzende Beschichtungen mit Glanzgraden größer 75 Einheiten (gemessen bei einem Winkel von 60°) vermessen. Die vorangehende Definition kann auf die Oberflächen der Beschichtungsfilme ebenso angewendet werden, wie auf das genannte Klebeband bzw. die Klebefolie.

Solche glänzenden Klebebänder oder Klebefolien sind bevorzugt, die, wenn auf einer Glasplatte und über einem weißen Untergrund fixiert, gemäß der DIN EN 13300:2002-11 bei einem Winkel von 60° vermessen, mindestens 90 Glanzeinheiten, bevorzugt mindestens 110 Glanzeinheiten und besonders bevorzugt mindestens 130 Glanzeinheiten aufweisen.

Die Zuverlässigkeit und Reproduzierbarkeit des Auftrags eines definierten Beschichtungsfilms lässt sich nochmals dadurch erhöhen, dass man die erfindungsgemäße Beschichtungsfilmaufziehvorrichtung mit einem elektromotorischen Antrieb, eingerichtet und ausgelegt für die Führung von Spaltrakel und/oder von Spiral- oder Rillenrakel über die ebene Beschichtungsseite des Substratkörpers, ausstattet.

Die der Erfindung zu Grunde liegende Aufgabe wird des Weiteren gelöst durch ein Verfahren zur Untersuchung der Oberfläche eines Beschichtungsfilms, insbesondere der Verlaufseigenschaften eines Beschichtungsfilms, auch erste Ausführungsvariante der Erfindung genannt, umfassend die Schritte

a) Zurverfügungstellung einer erfindungsgemäßen Beschichtungsfilmaufziehvorrichtung,

b) Auftragen einer viskosen Beschichtungsmasse auf den Applikationsabschnitt (ersten Abschnitt) der ebenen Beschichtungsseite des Substratkörpers in einer Menge, die ausreicht, um einen Beschichtungsfilm auf dem Substratkörper zu erzeugen, wobei Spaltrakel und Spiral- oder Rillenrakel jeweils jenseits der Beschichtungsmasse in Bezug auf den zu beschichtenden Abschnitt der Substratkörpers vorliegen und wobei die Spiral- oder Rillenrakel jenseits der Spaltrakel in Bezug auf den zu beschichtenden Abschnitt des Substratkörpers vorliegt,

c1) Führen von Spaltrakel und Spiral- oder Rillenrakel über die ebene Beschichtungsseite des Substratkörpers unter Ausbildung eines Beschichtungsfilms auf dem zweiten Abschnitt des Substratkörpers, wobei Spaltrakel und Spiral- oder Rillenrakel benachbart zueinander, insbesondere in gegenseitigem Kontakt stehend, geführt werden, und wobei die Spaltrakel der Spiral- oder Rillenrakel vorangeht,

d) Trocknen und/oder Abbinden und/oder Aushärten des erhaltenen Beschichtungsfilms und

f) Vermessen der erhaltenen Oberfläche des Beschichtungsfilms mit einem optischen und/oder taktilen Messgerät.

Das erfindungsgemäße Verfahren zur Bestimmung des Verlaufsverhaltens von Beschichtungsfilmen wie Maler- und Bautenlacken führt insbesondere dann zu besonders aussagekräftigen Ergebnissen, wenn die Spalthöhe der Ziehkante der Spaltrakel kleiner ist als die Nassschichtdicke der Spiral- oder Rillenrakel. Auf diese Weise gelingt es zuverlässig, dass die Menge an Beschichtungsmasse, die über die nachgeschaltete Spiral- oder Rillenrakel zu verteilen ist, derart gering zu halten, dass nach Passieren von Spiral- oder Rillenrakel nicht sogleich eine glatte Beschichtungsfilmoberfläche erhalten wird, sondern dass eine Oberflächenstrukturierung in Form von Furchen oder Rillen verbleibt. Solange die applizierte Beschichtungsmasse noch nicht getrocknet oder ausgehärtet ist, ist ihr auf der Beschichtungsseite die Möglichkeit gegeben, im Wege des Verlaufens eine glatte Filmoberfläche anzunehmen.

Die der Erfindung zugrunde liegende Aufgabe wird des Weiteren gelöst durch ein Verfahren zur Untersuchung der Oberfläche eines Beschichtungsfilms, insbesondere zur Bestimmung der Offenzeit eines Beschichtungsfilms, auch zweite Ausführungsvariante der Erfindung genannt, umfassend die Schritte

a) Zurverfügungstellung einer erfindungsgemäßen Beschichtungsfilmaufziehvorrichtung,

b) Auftragen einer viskosen Beschichtungsmasse auf den Applikationsabschnitt (ersten Abschnitt) der ebenen Beschichtungsseite des Substratkörpers in einer Menge, die ausreicht, um einen Beschichtungsfilm auf dem Substratkörper zu erzeugen, wobei Spaltrakel und Spiral- oder Rillenrakel jeweils jenseits der Beschichtungsmasse in Bezug auf den zu beschichtenden Abschnitt der Substratkörpers vorliegen und wobei die Spiral- oder Rillenrakel jenseits der Spaltrakel in Bezug auf den zu beschichtenden Abschnitt des Substratkörpers vorliegt,

c2) Führen von Spaltrakel und Spiral- oder Rillenrakel über die ebene Beschichtungsseite des Substratkörpers unter Ausbildung eines Beschichtungsfilms auf dem zweiten Abschnitt des Substratkörpers, wobei Spaltrakel und Spiral- öder Rillenrakel beabstandet voneinander und/oder zeitlich versetzt zueinander geführt werden und wobei die Spiral- oder Rillenrakel der Spaltrakel folgt,

d) Trocknen und/oder Abbinden und/oder Aushärten des erhaltenen Beschichtungsfilms und

f) Vermessen der erhaltenen Oberfläche des Beschichtungsfilms mit einem optischen und/oder taktilen Messgerät.

In einer alternativen Ausgestaltung kann die vorangehend geschilderte Ausführungsvariante eines erfindungsgemäßen Verfahrens die folgenden Schritte umfassen:

a) Zurverfügungstellung einer erfindungsgemäßen Beschichtungsfilmaufziehvorrichtung,

b) Auftragen einer viskosen Beschichtungsmasse auf den Applikationsabschnitt (ersten Abschnitt) der ebenen Beschichtungsseite des Substratkörpers in einer Menge, die ausreicht, um einen Beschichtungsfilm auf dem Substratkörper zu erzeugen, wobei die Spaltrakel jenseits der Beschichtungsmasse in Bezug auf den zu beschichtenden Abschnitt der Substratkörpers vorliegt,

c3) Führen der Spaltrakel über die ebene Beschichtungsseite des Substratkörpers unter Ausbildung eines Beschichtungsfilms auf dem zweiten Abschnitt des Substratkörpers, und
Führen von Spiral- oder Rillenrakel über den erhaltenen Beschichtungsfilm, vorzugsweise in derselben Richtung wie die Spaltrakel,

d) Trocknen und/oder Abbinden und/oder Aushärten des erhaltenen Beschichtungsfilms und

f) Vermessen der erhaltenen Oberfläche des Beschichtungsfilms mit einer Vorrichtung zur Vermessung der Oberfläche des Beschichtungsfilms, insbesondere einem optischen und/oder taktilen Messgerät.

Die letztgenannte Ausführungsform der zweiten Ausführungsvariante der Erfindung unterscheidet sich von der vorangehend genannten Ausführungsform dieser zweiten Ausführungsvariante des erfindungsgemäßen Verfahrens dadurch, dass zunächst mithilfe der Spaltrakel ein Beschichtungsfilm erzeugt wird. Die Spaltrakel kann somit separat und unabhängig von der Spiral- oder Rillenrakel eingesetzt werden. Erst nachdem mithilfe der Spaltrakel der Beschichtungsfilm frisch appliziert vorliegt, kommt die Spiral- oder Rillenrakel zum Einsatz und wird über den applizierten Beschichtungsfilm unter Ausbildung einer Oberflächenstrukturierung, vorzugsweise in Form von Spurrillen, geführt. Bei der vorangehend genannten Ausführungsform wird hingegen die Spiral- oder Rillenrakel über den Beschichtungsfilm geführt, wenn die vorangehende Spaltrakel noch stets im Einsatz ist und den Beschichtungsfilm aufträgt bzw. fertigstellt.

Bei diesen zwei Ausführungsformen der zweiten Ausführungsvariante des erfindungsgemäßen Verfahrens ist es, anders als bei dem vorangehend geschilderten Verfahren zur Vermessung der Verlaufseigenschaften von applizierten Beschichtungsmassen weniger bedeutsam, die Spalthöhe der Ziehkante der Spaltrakel kleiner einzustellen als die Nassschichtdicke der Spiral- oder Rillenrakel. Allerdings ist diese Ausführungsvariante auch hier bevorzugt. Gleichwohl ist es möglich, die Spalthöhe der Ziehkante der Spaltrakel und die Nassschichtdicke der Spiral- oder Rillenrakel im Wesentlichen gleich groß zu wählen.

Diese zweite Ausführungsvariante der Erfindung ermöglicht eine zuverlässige und reproduzierbare quantitative Bestimmung der Offenzeit von Beschichtungsfilmen, insbesondere Lacken. Diese Variante macht sich vorzugsweise die maschinelle Applikation eines Beschichtungs- bzw. Lackfilmes zu Nutze, in den eine definierte, maschinell durchgeführte Störung mittels einer Spiral- oder Rillenrakel eingebracht wird. Nach erfolgter Trocknung wird die Offenzeit zweckmäßigerweise mithilfe einer instrumentellen Rauheitsmessung bestimmt, die vorzugsweise auch eine Beurteilung des Lackverlaufs ermöglicht.

Insbesondere für solche Beschichtungsmasse, die nicht zu glänzenden Beschichtungsfilmen führen, hat es sich als sehr vorteilhaft in Bezug auf ein verlässliches und reproduzierbares Vermessen der erhaltenen Oberflächen erwiesen, nach Schritt d) und vor Schritt f) eine glänzende, insbesondere transparente, Folie, insbesondere Klebefolie, vorzugsweise auf Basis einer Celluloseacetat- oder Polypropylenfolie, auf die Oberfläche des Beschichtungsfilms haftend aufzubringen, wobei die Folie, insbesondere Klebefolie, ausgelegt und eingerichtet ist, um Unebenheiten der Oberfläche abzubilden (Schritt e). Die vorangehend geschilderte Ausführungsform eignet sich daher besonders bei Verwendung von Beschichtungsmassen, die Beschichtungsfilme mit matten Oberflächen oder bei Oberflächen mit mittlerem Glanz (auch seidenglänzende Oberflächen genannt) liefern. Eine Klebefolie im Sinne der Erfindung umfasst auch Klebebänder. Klebefolien im Sinne der Erfindung umfassen auch Haftfolien. Diese Folien sind dazu geeignet, mit der Oberfläche des ausgehärteten, abgebundenen und/oder getrockneten Beschichtungsfilms eine haftende Verbindung einzugehen und die Oberflächenstruktur dieses Beschichtungsfilms abzubilden. Verfügt eine glänzende Folie nicht selber schon über Klebe- oder Hafteigenschaften, kann diese Folie auch durch Applikation eines Klebe- oder Haftmittels mit der Oberfläche des Beschichtungsfilms haftend verbunden werden.

Die erfindungsgemäßen Verfahren zeichnen sich in einer bevorzugten Ausführungsform dadurch aus, dass die in Schritt e) erhaltene Oberfläche des Beschichtungsfilms mit mindestens einem Profilometer, insbesondere einem optischen und/oder taktilen Profilometer, wie Lichtinterferometer, einem Konfokalmikroskop, einem Laserprofilometer, bevorzugt mindestens einem taktilen Profilometer und/oder Laserprofilometer, vermessen wird, insbesondere hinsichtlich der Güte, beispielsweise der Glätte, dieser Oberfläche.

Ein weiterer Vorteil der erfindungsgemäßen Verfahren liegt auch darin begründet, dass Schritt c1) oder c2) oder c3) und gegebenenfalls auch Schritt d) und/oder f) maschinell durchgeführt werden können. Dies trägt zu einer weiteren Objektivierung der Versuchsergebnisse bei.

Bei den in den erfindungsgemäßen Verfahren zum Einsatz kommenden Beschichtungsmassen handelt es sich zum Beispiel um Acryl-, Alkydharz-, Polyurethan-, Vinylacetat,- Epoxidharz- oder Silikatbeschichtungsmassen.

Des Weiteren hat es sich als zweckmäßig erwiesen, dass bei den erfindungsgemäßen Verfahren darauf geachtet wird, dass die Spiral- oder Rillenrakel, insbesondere in Schritt c1) oder c2) oder c3), beim Führen über den applizierten Beschichtungsfilm nicht um die eigene Längsachse gedreht werden.

Mit der erfindungsgemäßen Beschichtungsfilmaufziehvorrichtung lassen sich in reproduzierbarer Weise sowohl die Offenzeit wie auch die Verlaufseigenschaften eines Beschichtungsfilms, insbesondere Lackfilms, ermitteln. Hierbei ist von Vorteil, dass es die erfindungsgemäße Beschichtungsfilmaufziehvorrichtung ohne weiteres gestattet, die Beschichtungsmasse auf der ebenen Beschichtungsseite eines Substratkörpers ausschließlich oder nahezu ausschließlich maschinell zu applizieren. Des Weiteren können mit der erfindungsgemäßen Beschichtungsfilmaufziehvorrichtung auch die Güte bzw. Glätte eines Beschichtungsfilms sowie die Verlaufseigenschaften und die Offenzeit ausschließlich oder nahezu ausschließlich maschinell bestimmt werden.

Mit der vorliegenden Erfindung geht die überraschende Erkenntnis einher, dass die Oberfläche eines Lackes, insbesondere eines Maler- oder Bautenlackes, sich reproduzierbar und objektiv mit Hilfe einer instrumentellen Bewertung bei vorheriger maschineller Applikation ermitteln lässt. Indem sich mit der vorliegenden Erfindung die Offenzeit von Beschichtungsfilmen, insbesondere Lackbeschichtungen, verlässlich und reproduzierbar bestimmen lässt, wird zum Beispiel die Möglichkeit eröffnet, objektiv die Auswirkung unterschiedlicher Klimabedingungen auf die Offenzeit zu untersuchen. Mit dem erfindungsgemäßen Verfahren zur Bestimmung der Offenzeit ist es möglich, Offenzeitverhalten verschiedener Lacksysteme objektiv miteinander zu vergleichen. Das gleiche trifft jeweils auch auf die Bestimmung der Verlaufseigenschaften solcher Beschichtungen zu. Mit der vorliegenden Erfindung gelingt demgemäß eine personen- und ortsunabhängige Bestimmung von Oberflächen von Beschichtungsfilmen, insbesondere von Lackbeschichtungen wie Maler- und Bautenlackbeschichtungen. Insbesondere ermöglicht die vorliegende Erfindung einen objektiven Vergleich der Oberflächen von unterschiedlichen Beschichtungsfilmen.

Weitere Merkmale und Vorteile der Erfindung ergeben sich aus der nachfolgenden Beschreibung, in der Ausführungsbeispiele der Erfindung anhand einer schematischen Zeichnung beispielhaft erläutert werden, ohne dadurch die Erfindung zu beschränken. Dabei zeigen:

Figur 1      eine schematische Darstellung eines mit der erfindungsgemäßen Beschichtungsfilmaufziehvorrichtung erhaltenen Beschichtungsfilms;

Figur 2      ein schematisches Ablaufschema der Bestimmung der Zeitdauer t für die Ermittlung der Offenzeit;

Figur 3      ein Diagramm, in dem der Rauheitsparameters $R_q$ gegen die Zeit t aufgetragen ist;

Figur 4      ein weiteres Diagramm, in dem der Rauheitsparameters $R_q$ gegen die Zeit t aufgetragen ist;

Figur 5      ein weiteres Diagramm, in dem der Rauheitsparatneters $R_q$ gegen die Zeit t aufgetragen ist.

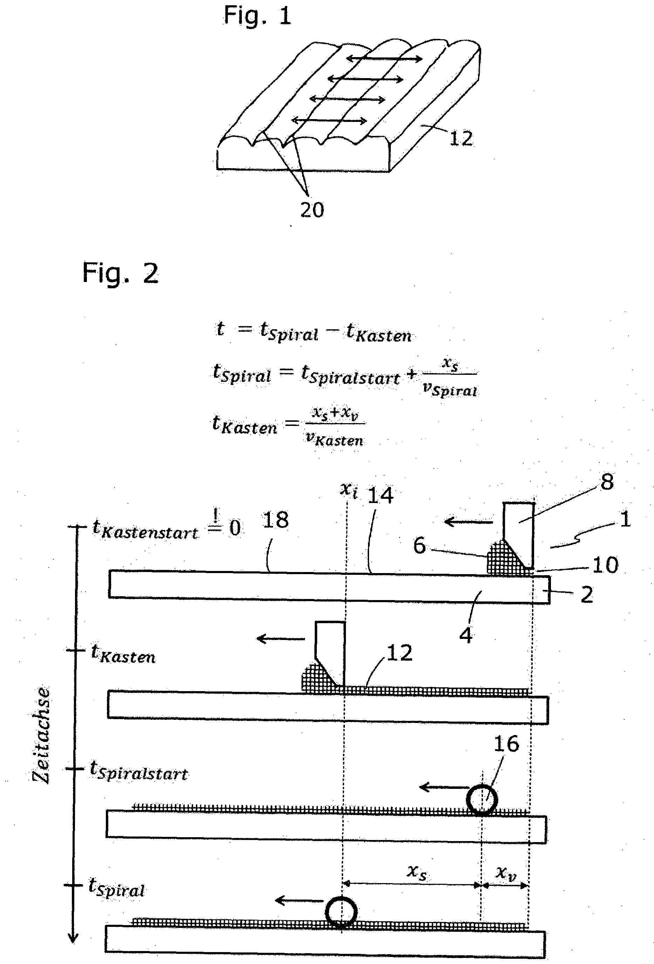

Figur 1 entnimmt man in schematischer perspektivischer Ansicht einen Ausschnitt eines mit der erfindungsgemäßen Beschichtungsfilmaufziehvorrichtung erhaltenen Beschichtungsfilms 12. Durch die Behandlung mit einer Spiralrakel sind Oberflächenstörungen in Form von Spuren 20 erhalten worden.

Figur 2 zeigt in schematischer Querschnittsdarstellung Bestandteile der erfindungsgemäßen Beschichtungsfilmaufziehvorrichtung 1. Auf dem Substratkörper 2 in Form eines Glassubstrats ist auf einem ersten Abschnitt 4 die Beschichtungsmasse 6 aufgetragen. Die Kastenrakel 8 befindet sich in Bezug auf deren Bewegungsrichtung jenseits dieser Beschichtungsmasse 6. Die Spaltrakel 8 verfügt über eine Spalthöhe 10, welche die Dicke des Beschichtungsfilms 12 vorgibt. Der Beschichtungsfilm 12 wird durch Bewegen der Kastenrakel 8 über den zweiten Abschnitt 18 der Beschichtungsseite 14 des Substrats 2 erhalten. Sobald der Beschichtungsfilm 12 vorliegt, wird in der dargestellten Ausführungsform die Spiralrakel 16 über den frisch applizierten Beschichtungsfilm gezogen. Die maßgebliche Zeitdauer t, über die die Offenzeit erhalten wird, ergibt sich durch Bildung der Differenz von $t_{Spiral}$ und $t_{Kasten}$, wie in Figur 2 dargestellt. Um zu der Offenzeit eines Beschichtungsfilms bzw. eines Beschichtungssystems, insbesondere Maler- oder Bautenlackes zu gelangen, wird, wie in Figur 2 gezeigt, die Zeit t als Dauer zwischen dem Zeitpunkt, an dem eine bestimmte Stelle x des Beschichtungsfilms mit einer Spaltrakel, insbesondere Kastenrakel, aufgezogen wird ($t_{Kasten}$), und dem Zeitpunkt, an dem die Spiral- oder Rillenrakel durch dieselbe Stelle x fährt ($t_{Spiral}$), ermittelt. In Richtung der Spurrillen ist diese Zeit t unterschiedlich, senkrecht zu den Spurrillen erhält man stets die gleiche Zeit. Zur Zeit t = 0 startet die Spaltrakel den Filmaufzug. Zur Zeit t = $t_{Spiralrakel}$ wird die Spiral- oder Rillenrakel in den Film eingelegt und durch den Lackfilm gezogen. Die jeweils für eine Stelle x im Lack interessante Zeit ist t = $t_{Spiral}$ - $t_{Kasten}$. Diese wird mit den in Figur 2 wiedergegebenen Formeln berechnet. Konkret bedeuten darin: $x_s$ = Abstand zwischen Startort der Spiral- oder Rillenrakel und Ort der Spiral- oder Rillenrakel zur Zeit t = $t_{Spiral}$; $v_{Spiral}$ = Geschwindigkeit der Spiral- oder Rillenrakel; $x_v$ = Abstand zwischen Startort der Spaltrakel, insbesondere Kastenrakel, und Startort der Spiral- oder Rillenrakel; und $v_{Kasten}$ = Geschwindigkeit der Spaltrakel, insbesondere Kastenrakel.

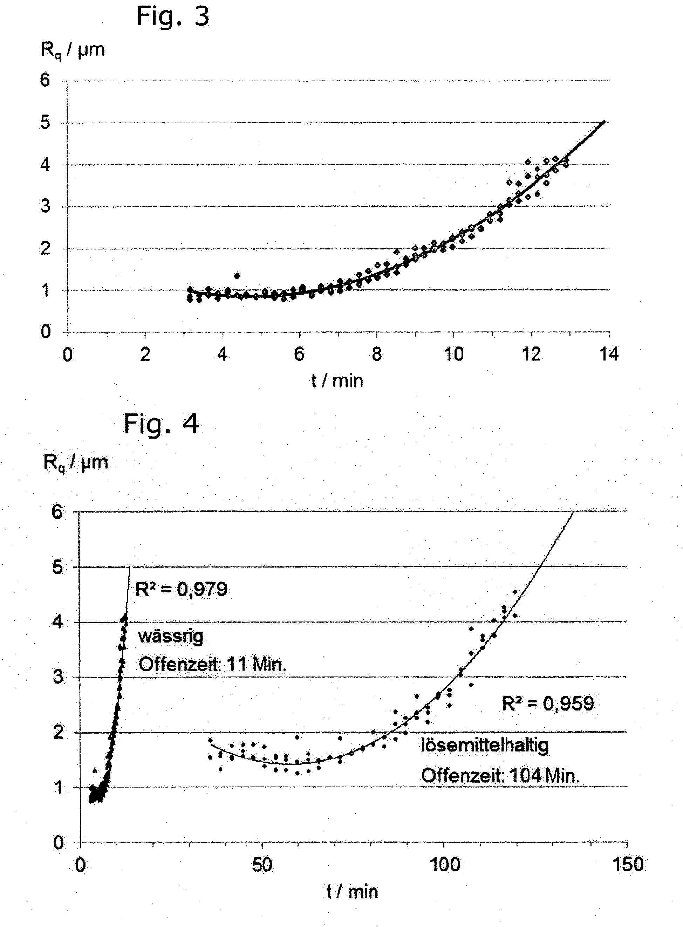

Figur 3 zeigt eine typische Auftragung des Rauheitsparameters $R_q$ gegen die Zeit t. Die Daten werden durch eine quadratische Funktion der Form "$R_q(t) = at^2 + bt + c$" gefittet. Die Offenzeit erhält man in diesem Fall durch Setzen von $R_q(t) = 3\ \mu m$ und anschließendes Auflösen der quadratischen Funktion nach der Zeit t. Rein mathematisch betrachtet fallen zwei Lösungen an. Hierbei wird nur diejenige der beiden mathematischen Lösungen als Offenzeit angesehen, welche im (Zeit-)Bereich der Messpunkte liegt. Bei einer relativ hohen Anzahl von Messzeiten t und Messungen pro Messzeit t sowie einer durch die praktischen Gegebenheiten vorgegebenen Wahl der Messzeiten t liegt die andere mathematische Lösung außerhalb des (Zeit-)Bereiches der Messpunkte. Sie hat keine Aussagekraft und kann daher verworfen werden. Für den Fachmann ist ohne weiteres erkennbar, welche der beiden mathematischen Lösungen nur als Offenzeit herangezogen werden kann. Die hier getroffene Festlegung des Grenzwertes $R_q(t)$ auf $R_q(t) = 3\ \mu m$ ist zum einen dem Umstand geschuldet, dass sich der Grenzwert merklich vom Grundrauschen, das bei $R_q(t)$ = ca. 1 bis 2 $\mu m$ angesiedelt werden kann, abheben sollte. Mangels Vorliegens national oder international anerkannter Standards hat sich für die Bestimmung der Güte bzw. der Oberfläche von Beschichtungsfilmen die Festlegung auf $R_q(t) = 3\ \mu m$ als Grenzwert als praktikabel erwiesen.

Figur 4 zeigt die Rauheitskurven und Offenzeiten eines kommerziell erhältlichen wässrigen Lackes im Vergleich mit einem kommerziell erhältlichen lösemittelhaltigen Lack. Die durchgezogenen Linien entsprechen jeweils dem Fit durch die Funktion "$R_q(t) = at^2 + bt + c$" mit zugehörigem Bestimmtheitsmaß $R^2$. Des Weiteren sind in dem Diagramm die Offenzeiten für die beiden Lacksysteme angegeben.

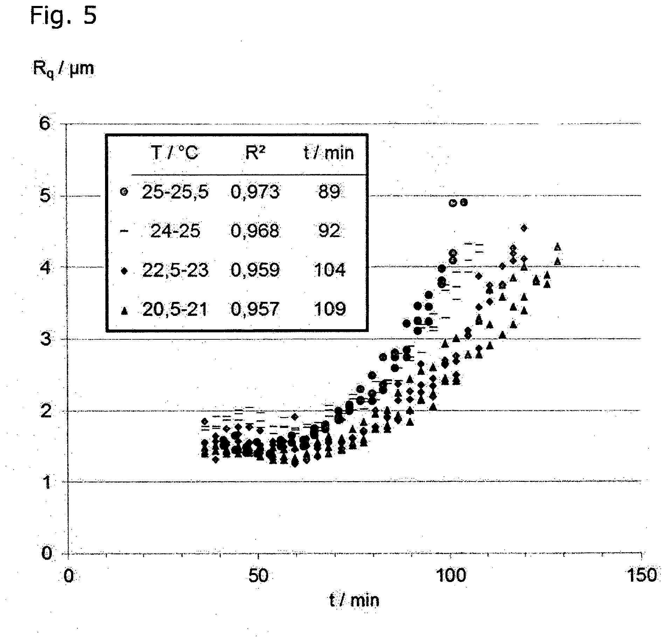

In Figur 5 ist der Rauheitsparameter $R_q$ gegen die Zeit t am Beispiel eines Lösemittelbasierten Lackes bei unterschiedlichen Temperaturen aufgetragen. In der ebenfalls in Figur 5 wiedergegebenen Tabelle sind jeweils die zugehörigen Bestimmtheitsmaße $R^2$ (Funktion $R_q(t) = at^2 + bt + c$) und Offenzeiten angegeben.

Die Erfindung wird nachfolgend anhand von Beispielen näher erläutert, ohne dass die Erfindung auf diese Beispiele beschränkt ist.

Bestimmung der Offenzeit:

Ein luftdicht verpackter Lack sowie die verwendeten Geräte wurden über Nacht auf 23 ± 2 °C vortemperiert. Die nachfolgenden Schritte fanden bei 23 ± 2 °C und 50 ± 5% relativer Luftfeuchte statt. Der Lack wurde mithilfe eines automatischen Aufzugsgerätes (Coatmaster 509 MC/3, Firma ERICHSEN) und einer Kastenrakel (100 $\mu m$ Spalthöhe; 100 $\mu m$ Nassfilmdicke, 229 mm Filmbreite, Firma ERICHSEN)) auf die Beschichtungsseite einer Glasplatte als Substratkörper appliziert (5 x 275 x 275 mm, Borosilikatglas, Firma Rocholl). Die verwendete Aufzugsgeschwindigkeit betrug 1,25 cm/s. Anschließend wurde eine Spiralrakel (200 $\mu m$ Nassfilmdicke, 250 mm Filmbreite, 320 mm Gesamtrakellänge, Firma TQC, Artikelnr. VF0117) in den applizierten Lackfilm gelegt. Die Spiralrakel wurde gleichmäßig beschwert (mit insgesamt ca. 1,7 kg), so dass die Spiralen der Spiralrakel im Wesentlichen zu jedem Zeitpunkt über einen breiten Bereich den Glasuntergrund berühren. Die Spiralrakel wurde mit einer Geschwindigkeit von 2 cm/min durch den applizierten Lackfilm gezogen. Es sei darauf hingewiesen, dass die verwendete Geschwindigkeit der Spiralrakel bei Bedarf an den jeweiligen Lack angepasst werden muss. Nachdem die Spiralrakel den Lack durchlaufen hatte, waren - je nach Zeitpunkt - mehr oder weniger stark ausgeprägte Spurrillen sichtbar. Die nach dem vorangehend geschilderten Verfahren erhaltenen Proben wurden ausreichend lange getrocknet, um sodann außerhalb des geschilderten, definierten Klimas charakterisiert werden zu können. Die Beurteilung der Spurrillen erfolgte mithilfe eines Rauheitsmessgerätes (Surface Roughness Tester PCE-RT2200, PCE Instruments, 1,5 cm Messstrecke). Die Rauheit wurde senkrecht zum Verlauf der Spurrillen gemessen (siehe Doppelpfeillinien in Figur 1). Pro vermessener Spurrille wurde die gemessene Rauheit in Form des quadratischen Mittenrauwertes $R_q$ nach der folgenden Formel erfasst:

$$R_q = \sqrt{\frac{\int_0^s [\bar{z} - z(x)]^2\, dx}{s}}$$

mit $\bar{z}$ = mittlere Höhe, z(x) = gemessene Höhe an der Stelle x, s = Länge der Messstrecke.

Die hier interessierende Zeit t ist die Dauer zwischen dem Zeitpunkt, an dem eine bestimmte Stelle x des Lackes mit der Kastenrakel aufgezogen wird ($t_{Kasten}$), und dem Zeitpunkt, an dem die Spiralrakel durch dieselbe Stelle x fährt ($t_{Spiral}$). In Richtung der Spurrillen ist diese Zeit t unterschiedlich, senkrecht zu den Spurrillen erhält man stets die gleiche Zeit. Die Berechnung der Zeit t erfolgt, wie vorangehend anhand Figur 2 erläutert. Aus der Auftragung der ermittelten Rauheitsparameter gegen die Zeit t erhielt man, wie vorangehend für Figur 3 beschrieben, für die getesteten Beschichtungssysteme die jeweiligen Offenzeiten.

Für einen im Handel erhältlichen Wasserlack wurde unter den vorangehend geschilderten Konditionen für das Bestimmtheitsmaß $R^2$ nach der Funktion "$R_q(t)$ = $at^2 + bt + c$" der Wert $R^2$ = 0,956 ± 0,016 (Mittelwert ± Standardabweichung) ermittelt. Die Offenzeit wurde zu 10:45 ± 0:24 min:sec (Mittelwert ± Standardabweichung) bestimmt. Das erfindungsgemäße Verfahren erlaubte den objektiven und verlässlichen Offenzeitvergleich verschiedener Lacke.

Ein Vergleich eines kommerziell erhältlichen wässrigen Lackes mit einem kommerziell erhältlichen lösemittelhaltigen Lack unter den vorangehend geschilderten Bedingungen ist in Figur 4 wiedergegeben.

Ferner konnten anhand der Vermessung eines lösemittelhaltigen Lackes, wie vorangehend beschrieben, bei unterschiedlichen Temperaturen die Auswirkungen unterschiedlicher Klimabedingungen auf die Offenzeit abgebildet werden. Die diesbezüglichen Ergebnisse sind in Figur 5 wiedergegeben.

## Patentansprüche

1. Beschichtungsfilmaufziehvorrichtung (1), umfassend einen Substratkörper (2) mit einer ebenen Beschichtungsseite für die Auftragung eines Beschichtungsfilms und mit einem ersten Abschnitt (4) für die Aufnahme einer den Beschichtungsfilm (12) bildenden Beschichtungsmasse (6) und einem zweiten Abschnitt (18) für die Ausbildung des Beschichtungsfilms aus der Beschichtungsmasse, eine Spaltrakel (8) mit einer Ziehkante mit vorgegebener oder einstellbarer Spalthöhe (10), und eine Spiral- oder Rillenrakel (16),
wobei Spaltrakel und Spiral- oder Rillenrakel auf der ebenen Beschichtungsseite des Substratkörpers angeordnet sind und wobei die Spiral- oder Rillenrakel in Bezug auf den zweiten Abschnitt jenseits der Spaltrakel vorliegt und wobei die Spalthöhe der Ziehkante der Spaltrakel kleiner ist als die Nassschichtdicke der Spiral- oder Rillenrakel.

2. Beschichtungsfilmaufziehvorrichtung nach Anspruch 1, **dadurch gekennzeichnet, dass** der Substratkörper eine Glasplatte, Kristallglasplatte, Holzplatte, Metallplatte, Kunststoffplatte, Kunststofffolie oder einen Prüfkarton, insbesondere eine Glasplatte, darstellt oder umfasst.

3. Beschichtungsfilmaufziehvorrichtung nach Anspruch 1 oder 2, ferner umfassend mindestens eine Fixiervorrichtung eingerichtet und ausgelegt für die Fixierung des Substratkörpers, insbesondere ausgewählt aus der Gruppe bestehend aus Schrauben, Kammern, Magneten, Klemmen, Klebevorrichtungen, insbesondere Klebebändern, Rahmen, Stoppern und Vakuumansaugvorrichtungen eingerichtet und ausgelegt zum Ansaugen des Substratkörpers von der der ebenen Beschichtungsseite gegenüberliegenden Seite.

4. Beschichtungsfilmaufziehvorrichtung nach einem oder mehreren der vorangehenden Ansprüche, **dadurch gekennzeichnet, dass** der Beschichtungsfilm ein Maler- oder Bautenlackfilm oder eine Dispersionsbeschichtung ist und/oder dass die Beschichtungsmasse eine Acryl-, Alkydharz-, Polyurethan-, Vinylacetat,- Epoxidharz- oder Silikatbeschichtungsmasse darstellt.

5. Beschichtungsfilmaufziehvorrichtung nach einem oder mehreren der vorangehenden Ansprüche, ferner enthaltend mindestens eine Vorrichtung zur Vermessung der Oberfläche des Beschichtungsfilms, insbesondere ein Profilometer, besonders bevorzugt ein optisches und/oder taktiles Profilometer, wie Lichtinterferometer oder Laserprofilometer, oder ein Konfokalmikroskop, bevorzugt mindestens ein taktiles Profilometer und/oder Laserprofilometer, jeweils eingerichtet und ausgelegt zur Vermessung der Oberfläche eines auf der ebenen Beschichtungsseite des Substratkörpers aufgetragenen Beschichtungsfilms.

6. Beschichtungsfilmaufziehvorrichtung nach einem oder mehreren der vorangehenden Ansprüche, **dadurch gekennzeichnet, dass** die Ziehkante der Spaltrakel eine Spalthöhe im Bereich von 15 bis 5000 $\mu$m, bevorzugt im Bereich von 15 bis 2000 $\mu$m, insbesondere im Bereich von 75 bis 200 $\mu$m, aufweist.

7. Beschichtungsfilmaufziehvorrichtung nach einem oder mehreren der vorangehenden Ansprüche, **dadurch gekennzeichnet, dass** die Spiral- oder Rillenrakel eine Nassschichtdicke im Bereich von 20 bis 5200 $\mu$m, bevorzugt im Bereich von 20 bis 2200 $\mu$m, insbesondere im Bereich von 80 bis 210 $\mu$m, aufweist und/oder, insbesondere bei der Bewegung entlang der ebenen Beschichtungsseite des Substratkörpers, nicht um die eigene Längsachse drehbar ist.

8. Beschichtungsfilmaufziehvorrichtung nach einem oder mehreren der vorangehenden Ansprüche, ferner umfassend einen elektromotorischen Antrieb, eingerichtet und ausgelegt für die Führung von Spaltrakel und/oder von Spiral- oder Rillenrakel über die ebene Beschichtungsseite des Substratkörpers.

9. Beschichtungsfilmaufziehvorrichtung nach einem oder mehreren der vorangehenden Ansprüche, **dadurch gekennzeichnet, dass**

die Spiral- oder Rillenrakel beabstandet von der Spaltrakel oder benachbart zu, insbesondere in Kontakt mit, der Spaltrakel vorliegt.

10. Beschichtungsfilmaufziehvorrichtung nach einem oder mehreren der vorangehenden Ansprüche, **dadurch gekennzeichnet, dass**
die ebene Beschichtungsseite des Substratkörpers im Wesentlichen horizontal ausgerichtet vorliegt.

11. Verfahren zur Untersuchung der Oberfläche eines Beschichtungsfilms, insbesondere der Verlaufseigenschaften eines Beschichtungsfilms, umfassend die Schritte

    a) Zurverfügungstellung einer Vorrichtung gemäß einem der vorangehenden Ansprüche,
    b) Auftragen einer viskosen Beschichtungsmasse auf den Applikationsabschnitt (ersten Abschnitt) der ebenen Beschichtungsseite des Substratkörpers in einer Menge, die ausreicht, um einen Beschichtungsfilm auf dem Substratkörper zu erzeugen, wobei Spaltrakel und Spiral- oder Rillenrakel jeweils jenseits der Beschichtungsmasse in Bezug auf den zu beschichtenden Abschnitt des Substratkörpers vorliegen und wobei die Spiral- oder Rillenrakel jenseits der Spaltrakel in Bezug auf den zu beschichtenden Abschnitt des Substratkörpers vorliegt,
    c1) Führen von Spaltrakel und Spiral- oder Rillenrakel über die ebene Beschichtungsseite des Substratkörpers unter Ausbildung eines Beschichtungsfilms auf dem zweiten Abschnitt des Substratkörpers, wobei Spaltrakel und Spiral- oder Rillenrakel benachbart zueinander, insbesondere in gegenseitigem Kontakt stehend, geführt werden, und wobei die Spaltrakel der Spiral- oder Rillenrakel vorangeht; oder
    c2) Führen von Spaltrakel und Spiral- oder Rillenrakel über die ebene Beschichtungsseite des Substratkörpers unter Ausbildung eines Beschichtungsfilms auf dem zweiten Abschnitt des Substratkörpers, wobei Spaltrakel und Spiral- oder Rillenrakel beabstandet voneinander und/oder zeitlich versetzt zueinander geführt werden und wobei die Spiral- oder Rillenrakel der Spaltrakel folgt; oder
    c3) Führen der Spaltrakel über die ebene Beschichtungsseite des Substratkörpers unter Ausbildung eines Beschichtungsfilms auf dem zweiten Abschnitt des Substratkörpers, und Führen von Spiral- oder Rillenrakel über den so erhaltenen Beschichtungsfilm, vorzugsweise in derselben Richtung wie die Spaltrakel,
    d) Trocknen und/oder Abbinden und/oder Aushärten des erhaltenen Beschichtungsfilms und
    f) Vermessen der erhaltenen Oberfläche des Beschichtungsfilms mit einer Vorrichtung zur Vermessung der Oberfläche des Beschichtungsfilms, insbesondere einem optischen und/oder taktilen Messgerät.

12. Verfahren nach Anspruch 11, ferner umfassend nach Schritt d) und vor Schritt f) Aufbringen einer gemäß DIN EN 13300:2002-11 glänzenden, insbesondere transparenten, Folie, insbesondere Klebefolie, vorzugsweise auf Basis einer Celluloseacetat- oder Polypropylenfolie, auf die Oberfläche des Beschichtungsfilms, wobei die Folie, insbesondere Klebefolie, eingerichtet und ausgelegt ist, um Unebenheiten der Oberfläche abzubilden (Schritt e)).

13. Verfahren nach Anspruch 12, **dadurch gekennzeichnet, dass**
die Oberfläche des Beschichtungsfilms gemäß DIN EN 13300:2002-11 matt ist oder einen mittleren Glanz aufweist.

14. Verfahren nach einem der Ansprüche 11 bis 13, **dadurch gekennzeichnet, dass**
die Oberfläche des Beschichtungsfilms gemäß DIN EN 13300:2002-11 glänzend ist.

15. Verfahren nach einem der Ansprüche 11 bis 14, **dadurch gekennzeichnet, dass**
die in Schritt d) oder e) erhaltene Oberfläche des Beschichtungsfilms mit mindestens einem Profilometer, insbesondere einem optischen und/oder taktilen Profilometer, wie Lichtinterferometer, einem Konfokalmikroskop und/oder einem Laserprofilometer, bevorzugt mindestens einem taktilen Profilometer und/oder Laserprofilometer, vermessen wird, insbesondere hinsichtlich der Glätte dieser Oberfläche.

16. Verfahren nach einem der Ansprüche 11 bis 15, **dadurch gekennzeichnet, dass** die Spalthöhe der Ziehkante der Spaltrakel kleiner ist als die Nassschichtdicke der Spiral- oder Rillenrakel.

17. Verfahren nach einem der Ansprüche 11 bis 16, **dadurch gekennzeichnet, dass** Schritt c1) oder c2) oder c3) und gegebenenfalls auch Schritt d) und/oder f) maschinell durchgeführt werden.

18. Verfahren nach einem der Ansprüche 11 bis 17, **dadurch gekennzeichnet, dass** die Beschichtungsmasse eine Acryl-, Alkydharz-, Polyurethan-, Vinylacetat,- Epoxidharz- oder Silikatbeschichtungsmasse darstellt.

19. Verfahren nach einem der Ansprüche 11 bis 18, **dadurch gekennzeichnet, dass** die Spiral- oder Rillenrakel, insbesondere in Schritt c1) oder c2) oder c3), bei der Bewegung entlang der ebenen Beschichtungsseite des Substratkörpers nicht um die eigene Längsachse gedreht wird.

20. Verwendung der Beschichtungsfilmaufziehvorrichtung nach einem der Ansprüche 1 bis 10 für die Bestimmung der Offenzeit oder der Verlaufseigenschaften eines Beschichtungsfilms, insbesondere Lackfilms, vorzugsweise Maler- oder Bautenlackfilms.

21. Verwendung der Beschichtungsfilmaufziehvorrichtung nach einem der Ansprüche 1 bis 10 für die maschinelle Applikation der Beschichtungsmasse auf der ebenen Beschichtungsseite eines Substratkörpers.

22. Verwendung der Beschichtungsfilmaufziehvorrichtung nach einem der Ansprüche 1 bis 10 für die, insbesondere maschinelle, Bestimmung der Oberfläche, insbesondere der Güte der Oberfläche, eines Beschichtungsfilms, insbesondere Maler- oder Bautenlackfilms.

**Claims**

1. A coating film applying device (1), comprising a substrate body (2) with a flat coating side for the application of a coating film and with a first section (4) for receiving a coating mass (6) forming the coating film (12) and a second section (18) for forming the coating film from the coating mass, a gap squeegee (8) with a drawing blade having a predefined or adjustable gap height (10) and a spiral or grooved squeegee (16),
wherein gap squeegee and spiral or grooved squeegee are arranged on the flat coating side of the substrate body, and wherein the spiral or grooved squeegee is provided on the other side of the gap squeegee in relation to the second section, and wherein the gap height of the drawing blade of the gap squeegee is smaller than the wet coating thickness of the spiral or grooved squeegee.

2. The coating film applying device according to Claim 1, **characterised in that** the substrate body is or comprises a glass plate, crystal glass plate, wooden plate, metal plate, plastic plate, plastic film or a test board, in particular a glass plate.

3. The coating film applying device according to Claim 1 or Claim 2, also comprising at least one fixing device which is set up and configured for fixing the substrate body, in particular selected from a group consisting of screws, cavities, magnets, clamps, adhesive devices, in particular adhesive bands, frames, stoppers and vacuum suction devices which are set up and configured for suctioning the substrate body from the side opposite the flat coating side.

4. The coating film applying device according to one or more of the preceding claims, **characterised in that** the coating film is a paint film for painting or construction or a dispersion coating and/or **in that** the coating mass is an acrylic, alkyd resin, polyurethane, vinyl acetate, epoxy resin or silicate coating mass.

5. The coating film applying device according to one or more of the preceding claims, further including at least one device for measuring the surface of the coating film, in particular a profilometer, particularly preferably an optical and/or tactile profilometer, such as a light interferometer or laser profilometer, or a confocal microscope, preferably at least one tactile profilometer and/or laser profilometer, which are set up and configured respectively for measuring the surface of a coating film applied onto the flat coating side of the substrate body.

6. The coating film applying device according to one or more of the preceding claims, **characterised in that** the drawing blade of the gap squeegee has a gap height in the range of 15 to 5000 $\mu$m, preferably in the range of 15 to 2000 $\mu$m, in particular in the range of 75 to 200 $\mu$m.

7. The coating film applying device according to one or more of the preceding claims, **characterised in that** the spiral or grooved squeegee has a wet coating thickness in the range of 20 to 5200 $\mu$m, preferably in the range of 20 to 2200 $\mu$m, in particular in the range of 80 to 210 $\mu$m and/or is in particular during movement along the flat coating side of the substrate body not rotatable about its own longitudinal axis.

8. The coating film applying device according to one or more of the preceding claims, further comprising an electric motor drive, which is set up and configured for guiding the gap squeegee and/or spiral or grooved squeegee over the flat coating side of the substrate body.

9. Coating film applying device according to one or more of the preceding claims, **characterised in that** the spiral or grooved squeegee is spaced apart from the gap squeegee or adjacent to the latter, in particular is in contact with the gap squeegee.

10. Coating film applying device according to one or more of the preceding claims, **characterised in that** the flat coating side of the substrate body is aligned to be essentially horizontal.

11. Method for the examination of the surface of a coating film, in particular of the running properties of a coating film, comprising the steps of:

   a) providing a device according to any of the preceding claims,

b) applying a viscous coating mass onto the application section (first section) of the flat coating side of the substrate body in a sufficient amount to produce a coating film on the substrate body, wherein gap squeegee and spiral or grooved squeegee respectively are provided on the other side of the coating mass in relation to the section of the substrate body to be coated and wherein the spiral or grooved squeegee is provided on the other side of the gap squeegee in relation to the section of the substrate to be coated,

c1) guiding the gap squeegee and spiral or grooved squeegee over the flat coating side of the substrate body thus forming a coating film on the second section of the substrate body, wherein gap squeegee and spiral or grooved squeegee are guided adjacent to one another, in particular in mutual contact with one another, and wherein the gap squeegee precedes the spiral or grooved squeegee; or

c2) guiding the gap squeegee and spiral or grooved squeegee over the flat coating side of the substrate body thus forming a coating film on the second section of the substrate body, wherein the gap squeegee and spiral or grooved squeegee are guided spaced apart from one another and/or with a time delay relative to one another and wherein the spiral or grooved squeegee follows the gap squeegee; or

c3) guiding the gap squeegee over the flat coating side of the substrate body thus forming a coating film on the second section of the substrate body, and

guiding the spiral or grooved squeegee over the thus obtained coating film, preferably in the same direction as the squeegee,

d) drying and/or setting and/or curing the obtained coating film and

f) measuring the obtained surface of the coating film with a device for measuring the surface of the coating film, in particular an optical and/or tactile measuring device,

12. The method according to Claim 11 further comprising after step d) and before step f) applying a film, in particular a transparent film, which is glossy in accordance with DIN EN 13300:2002-11, in particular an adhesive film, preferably on the basis of a cellulose acetate or polypropylene film, onto the surface of the coating film, wherein the film, in particular the adhesive film, is set up and configured to show unevenness on the surface (step e)).

13. The method according to Claim 12, **characterised in that** the surface of the coating film is matt in accordance with DIN EN 13300:2002-11 or has a medium gloss.

14. The method according to any of Claims 11 to 13, **characterised in that** the surface of the coating film is glossy in accordance with DIN EN 13300:2002-11.

15. The method according to any of Claims 11 to 14, **characterised in that** the surface of the coating film obtained in step d) or e) is measured by at least one profilometer, in particular an optical and/or tactile profilometer, such as a light interferometer, a confocal microscope and/or a laser profilometer, preferably at least one tactile profilometer and/or laser profilometer, in particular with respect to the smoothness of said surface.

16. The method according to any of Claims 11 to 15, **characterised in that** the gap height of the drawing blade of the gap squeegee is smaller than the wet coating thickness of the spiral or grooved squeegee.

17. The method according to any of Claims 11 to 16, **characterised in that** step c1) or c2) or c3) and possibly also step d) and/or f) are performed by machine.

18. The method according to any of Claims 11 to 17 **characterised in that** the coating mass is an acrylic, alkyd resin, polyurethane, vinyl acetate, epoxy resin or silicate coating mass.

19. The method according to any of Claims 1 to 18, **characterised in that** the spiral or grooved squeegee is not rotated about its own longitudinal axis, in particular in step c1) or c2) or c3), when moving along the flat coating side of the substrate body.

20. A use of the coating film applying device according to any of Claims 1 to 10 for determining the curing time or running properties of a coating film, in particular a paint film, preferably a paint film for painting or construction.

21. The use of the coating film applying device according to any of Claims 1 to 10 for the machine application of the coating mass onto the flat coating side of a substrate body.

22. The use of the coating film applying device according to any of Claims 1 to 10 for determining the surface, in particular by machine, in particular the quality of the surface of a coating film, in particular a paint film for painting or construction.

**Revendications**

1. Dispositif d'étalement d'un film de revêtement (1), comprenant un corps de substrat (2) avec une face de revêtement plane pour l'application d'un film de revêtement et avec une première partie (4) pour la réception d'une masse de revêtement formant le film de revêtement (12) et une deuxième partie (18) pour la formation du film de revêtement à partir de la masse de revêtement, une racle à fente (8) avec un bord d'étirement à hauteur de fente (10) définie ou réglable et une racle à spirale ou rainurée (16), où la racle à fente et la racle à spirale ou rainurée sont disposées sur la face de revêtement plane du corps de substrat et où la racle à spirale ou rainurée est située au-delà de la racle à fente par rapport à la deuxième partie, et où la hauteur de fente du bord d'étirement de la racle à fente est inférieure à l'épaisseur de couche humide de la racle à spirale ou rainurée.

2. Dispositif d'étalement d'un film de revêtement selon la revendication 1, **caractérisé en ce que** le corps de substrat constitue ou comprend une plaque de verre, une plaque de cristal, une plaque de bois, une plaque métallique, une plaque en matière plastique, une feuille en matière plastique ou une carte de sonde, en particulier une plaque de verre.

3. Dispositif d'étalement d'un film de revêtement selon la revendication 1 ou la revendication 2, comprenant en outre au moins un dispositif de fixation prévu et réalisé pour la fixation du corps de substrat, en particulier sélectionné dans le groupe comprenant vis, agrafes, aimants, pinces, systèmes de fixation, en particulier rubans adhésifs, cadres, butées et systèmes d'aspiration et de vide prévus et réalisés pour l'aspiration du corps de substrat par la face opposée à la face de revêtement plane.

4. Dispositif d'étalement d'un film de revêtement selon une ou plusieurs des revendications précédentes, **caractérisé en ce que** le film de revêtement est un film de peinture décorative ou de peinture pour bâtiment ou un revêtement à dispersion et/ou **en ce que** la masse de revêtement est une masse de revêtement acrylique, en résine alkyde, polyuréthane, en acétate de vinyle, résine époxyde ou silicate.

5. Dispositif d'étalement d'un film de revêtement selon une ou plusieurs des revendications précédentes, comprenant en outre au moins un dispositif de mesure de la surface du film de revêtement, en particulier un profilomètre, tout particulièrement un profilomètre optique et/ou tactile, tel qu'un interféromètre lumineux ou un profilomètre laser, ou un microscope confocal, préférentiellement au moins un profilomètre tactile et/ou un profilomètre laser, prévu et réalisé pour mesurer la surface d'un film de revêtement appliqué sur la face de revêtement plane du corps de substrat.

6. Dispositif d'étalement d'un film de revêtement selon une ou plusieurs des revendications précédentes, **caractérisé en ce que** le bord d'étirement de la racle à fente présente une hauteur de fente comprise entre 15 et 5000 $\mu$m, préférentiellement entre 15 et 2000 $\mu$m, tout particulièrement entre 75 et 200 $\mu$m.

7. Dispositif d'étalement d'un film de revêtement selon une ou plusieurs des revendications précédentes, **caractérisé en ce que** la racle à spirale ou rainurée présente une épaisseur de couche humide comprise entre 20 et 520à $\mu$m, préférentiellement entre 20 et 2200 $\mu$m, tout particulièrement entre 80 et 210 $\mu$m, et/ou n'est en particulier pas rotative autour de son axe longitudinal propre en cas de déplacement le long de la face de revêtement plane du corps de substrat.

8. Dispositif d'étalement d'un film de revêtement selon une ou plusieurs des revendications précédentes, comprenant en outre un entraînement par moteur électrique, prévu et réalisé pour le guidage de la racle à fente et/ou de la racle à spirale ou rainurée sur la face de revêtement plane du corps de substrat.

9. Dispositif d'étalement d'un film de revêtement selon une ou plusieurs des revendications précédentes, **caractérisé en ce que** la racle à spirale ou rainurée est espacée de la racle à fente ou adjacente à la racle à fente, en particulier en contact avec celle-ci.

10. Dispositif d'étalement d'un film de revêtement selon une ou plusieurs des revendications précédentes, **caractérisé en ce que** la face de revêtement plane du corps de substrat est sensiblement horizontale.

11. Procédé d'examen de la surface d'un film de revêtement, en particulier des caractéristiques d'écoulement d'un film de revêtement, comprenant les étapes suivantes :

a) préparation d'un dispositif selon l'une des revendications précédentes,
b) application d'une masse de revêtement visqueuse sur la partie d'application (première partie) de la face de revêtement plane du corps de substrat, dans une quantité suffisante pour produire un film de revêtement sur le corps de substrat, la racle à fente et la racle à spirale ou rainurée étant situées chacune au-delà de la masse de revêtement par rapport à la partie du corps de substrat à revêtir et la racle à spirale ou rainurée étant située au-delà de la racle à fente par rapport à la partie du corps de substrat à revêtir,
c1) guidage de la racle à fente et de la racle à spirale ou rainurée sur la face de revêtement plane du corps de substrat en formant un film de revêtement sur la deuxième partie du corps de substrat, la racle à fente et la racle à spirale ou rainurée étant guidées de manière adjacente l'une à l'autre, en particulier en contact réciproque, et la racle à fente précédant la racle à spirale ou rainurée ; ou

c2) guidage de la racle à fente et de la racle à spirale ou rainurée sur la face de revêtement plane du corps de substrat en formant un film de revêtement sur la deuxième partie du corps de substrat, la racle à fente et la racle à spirale ou rainurée étant espacées l'une de l'autre et/ou guidées avec un décalage temporel l'une par rapport à l'autre, et la racle à spirale ou rainurée suivant la racle à fente ; ou

c3) guidage de la racle à fente sur la face de revêtement plane du corps de substrat en formant un film de revêtement sur la deuxième partie du corps de substrat, et guidage de la racle à spirale ou rainurée sur le film de revêtement ainsi obtenu, préférentiellement dans la même direction que la racle à fente,

d) séchage et/ou prise et/ou durcissement du film de revêtement obtenu et

f) mesure de la surface du film de revêtement obtenue avec un dispositif de mesure de la surface du film de revêtement, en particulier un appareil de mesure optique et/ou tactile.

12. Procédé selon la revendication 11, comprenant en outre

après l'étape d) et avant l'étape f), l'application d'une feuille brillante suivant DIN EN 13300:2002-11, en particulier transparente, en particulier une feuille autocollante, préférentiellement à base d'acétate de cellulose ou une feuille Polypropylène, sur la surface du film de revêtement, ladite feuille, en particulier une feuille autocollante, étant prévue et réalisée pour former des inégalités de surface (étape e).

13. Procédé selon la revendication 12, **caractérisé en ce que** la surface du film de revêtement suivant DIN EN 13300:2002-11 est mate ou a une brillance moyenne.

14. Procédé selon l'une des revendications 11 à 13, **caractérisé en ce que** la surface du film de revêtement suivant DIN EN 13300:2002-11 est brillante.

15. Procédé selon l'une des revendications 11 à 14, **caractérisé en ce que** la surface du film de revêtement obtenue lors de l'étape d) ou e) est mesurée avec au moins un profilomètre, en particulier un profilomètre optique et/ou tactile, tel qu'un interféromètre lumineux, un microscope confocal et/ou un profilomètre laser, préférentiellement au moins un profilomètre tactile et/ou un profilomètre laser, en particulier relativement à la brillance de ladite surface.

16. Procédé selon l'une des revendications 11 à 15, **ca-**

**ractérisé en ce que** la hauteur de fente du bord d'étirement de la racle à fente est inférieure à l'épaisseur de couche humide de la racle à spirale ou rainurée.

17. Procédé selon l'une des revendications 11 à 16, **caractérisé en ce que** l'étape c1) ou c2) ou c3) et le cas échéant l'étape d) et/ou l'étape f) sont exécutées par des moyens mécaniques.

18. Procédé selon l'une des revendications 11 à 17, **caractérisé en ce que** la masse de revêtement est une est une masse de revêtement acrylique, en résine alkyde, polyuréthane, en acétate de vinyle, résine époxyde ou silicate.

19. Procédé selon l'une des revendications 11 à 18, **caractérisé en ce qu'**en particulier lors de l'étape ci) ou c2) ou c3), la racle à spirale ou rainurée n'est pas rotative autour de son axe longitudinal propre lors du déplacement le long de la face de revêtement plane du corps de substrat.

20. Utilisation du dispositif d'étalement d'un film de revêtement selon l'une des revendications 1 à 10 pour la détermination du temps d'ouverture ou des caractéristiques d'écoulement d'un film de revêtement, en particulier un film de laque, préférentiellement d'un film de peinture décorative ou de peinture pour bâtiment.

21. Utilisation du dispositif d'étalement d'un film de revêtement selon l'une des revendications 1 à 10 pour l'application mécanique de la masse de revêtement sur la face de revêtement plane d'un corps de substrat.

22. Utilisation du dispositif d'étalement d'un film de revêtement selon l'une des revendications 1 à 10 pour la détermination, en particulier mécanique, de la surface, en particulier de la qualité de la surface d'un film de revêtement, en particulier d'un film de peinture décorative ou de peinture pour bâtiment.

## Fig. 1

## Fig. 2

$$t = t_{Spiral} - t_{Kasten}$$

$$t_{Spiral} = t_{Spiralstart} + \frac{x_s}{v_{Spiral}}$$

$$t_{Kasten} = \frac{x_s + x_v}{v_{Kasten}}$$

## Fig. 3

R_q / µm vs t / min

## Fig. 4

R_q / µm vs t / min

$R^2 = 0,979$

wässrig
Offenzeit: 11 Min.

$R^2 = 0,959$

lösemittelhaltig
Offenzeit: 104 Min.

Fig. 5

R$_q$ / µm

| T / °C | R² | t / min |
|--------|-------|---------|
| ⊙ 25-25,5 | 0,973 | 89 |
| – 24-25 | 0,968 | 92 |
| ♦ 22,5-23 | 0,959 | 104 |
| ▲ 20,5-21 | 0,957 | 109 |

t / min

**IN DER BESCHREIBUNG AUFGEFÜHRTE DOKUMENTE**

**In der Beschreibung aufgeführte Nicht-Patentliteratur**

- *K CONTROL COATER & K PAINT APPLICATOR,* Februar 2011, http://www.rkprint.co.uk/wp-content/uploads/2011/01/KControlCoater.pdf